# EUROPEAN PATENT APPLICATION

(11) **EP 4 274 177 A1**
(43) Date of publication of application: **08.11.2023**
(21) Application number: 23169793.9
(22) Date of filing: 25.04.2023
(51) Int. Cl.: H04L 41/0823, H04L 41/14, H04L 41/16, H04W 24/02, H04W 24/04, H04L 41/0816, H04L 41/147

(54) **METHOD FOR EVALUATING ACTION IMPACT OVER MOBILE NETWORK PERFORMANCE**

(30) Priority: 05.05.2022 US 202263338566 P
(71) Applicant: Nokia Solutions and Networks Oy, 02610 Espoo (FI)
(72) Inventor: BEGA, Dario, 80802 Munich (DE); GAJIC, Borislava, 82008 Unterhaching (DE)
(74) Representative: Nokia EPO representatives

(57) **Abstract**

An apparatus configured to: transmit, to an analytics producing entity, an indication to perform action impact analysis for a machine learning model; receive, from the analytics producing entity, a message comprising at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

## Description

### TECHNICAL FIELD

The example and non-limiting embodiments relate generally to network communications and, more particularly, to artificial intelligence/machine learning techniques.

### BACKGROUND

It is known, in ML/AI, to evaluate accuracy of a model.

### SUMMARY

The following summary is merely intended to be illustrative. The summary is not intended to limit the scope of the claims.

In accordance with one aspect, an apparatus comprising: at least one processor; and at least one memory including computer program code; the at least one memory and the computer program code configured to, with the at least one processor, cause the apparatus at least to: transmit, to an analytics producing entity, an indication to perform action impact analysis for a machine learning model; receive, from the analytics producing entity, a message comprising at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

In accordance with one aspect, a method comprising: transmitting, to an analytics producing entity, an indication to perform action impact analysis for a machine learning model; receiving, from the analytics producing entity, a message comprising at least one of: analytics, a prediction, or a recommendation from the machine learning model; selecting at least one action based, at least partially, on the received message; enforcing the at least one selected action; obtaining an action impact analysis for the at least one enforced action and the machine learning model; evaluating the action impact analysis; and determining whether to request a change regarding the machine learning model in response to the evaluation of the action impact analysis.

In accordance with one aspect, an apparatus comprising means for performing: transmitting, to an analytics producing entity, an indication to perform action impact analysis for a machine learning model; receiving, from the analytics producing entity, a message comprising at least one of: analytics, a prediction, or a recommendation from the machine learning model; selecting at least one action based, at least partially, on the received message; enforcing the at least one selected action; obtaining an action impact analysis for the at least one enforced action and the machine learning model; evaluating the action impact analysis; and determining whether to request a change regarding the machine learning model in response to the evaluation of the action impact analysis.

In accordance with one aspect, a non-transitory computer-readable medium comprising program instructions stored thereon which, when executed with at least one processor, cause the at least one processor to: transmit, to an analytics producing entity, an indication to perform action impact analysis for a machine learning model; receive, from the analytics producing entity, a message comprising at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

In accordance with one aspect, an apparatus comprising: at least one processor; and at least one non-transitory memory including computer program code; the at least one memory and the computer program code configured to, with the at least one processor, cause the apparatus at least to: receive, from an analytics consuming entity, an indication to perform action impact analysis for a machine learning model; perform data collection based, at least partially, on the received indication; cause running of the machine learning model based, at least partially, on the received indication and the data collected; transmit a message, to the analytics consuming entity, comprising at least one of: analytics, a prediction, or a recommendation from the machine learning model based, at least partially, on the running of the machine learning model; perform data collection and monitoring for a mobile network; generate a report based, at least partially, on the data collection and monitoring for the mobile network; and transmit the report to the analytics consuming entity.

In accordance with one aspect, a method comprising: receiving, from an analytics consuming entity, an indication to perform action impact analysis for a machine learning model; performing data collection based, at least partially, on the received indication; causing running of the machine learning model based, at least partially, on the received indication and the data collected; transmitting a message, to the analytics consuming entity, comprising at least one of: analytics, a prediction, or a recommendation from the machine learning model based, at least partially, on the running of the machine learning model; performing data collection and monitoring for a mobile network; generating a report based, at least partially, on the data collection and monitoring for the mobile network; and transmitting the report to the analytics consuming entity.

In accordance with one aspect, an apparatus comprising means for performing: receiving, from an analytics consuming entity, an indication to perform action impact analysis for a machine learning model; data collection based, at least partially, on the received indication; causing running of the machine learning model based, at least partially, on the received indication and the data collected; transmitting a message, to the analytics consuming entity, comprising at least one of: analytics, a prediction, or a recommendation from the machine learning model based, at least partially, on the running of the machine learning model; data collection and monitoring for a mobile network; generating a report based, at least partially, on the data collection and monitoring for the mobile network; and transmitting the report to the analytics consuming entity.

In accordance with one aspect, a non-transitory computer-readable medium comprising program instructions stored thereon which, when executed with at least one processor, cause the at least one processor to: cause receiving, from an analytics consuming entity, of an indication to perform action impact analysis for a machine learning model; perform data collection based, at least partially, on the received indication; cause running of the machine learning model based, at least partially, on the received indication and the data collected; cause transmitting of a message, to the analytics consuming entity, comprising at least one of: analytics, a prediction, or a recommendation from the machine learning model based, at least partially, on the running of the machine learning model; perform data collection and monitoring for a mobile network; generate a report based, at least partially, on the data collection and monitoring for the mobile network; and cause transmitting of the report to the analytics consuming entity.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4 is a diagram illustrating features as described herein;
FIG. 5 is a diagram illustrating features as described herein;
FIG. 6 is a flowchart illustrating steps as described herein; and
FIG. 7 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- 5GS: 5G system
- 6G: sixth generation
- ADRF: analytical data repository function
- Al: artificial intelligence
- AMF: access and mobility management function
- AOI: area of interest
- CQI: channel quality indicator
- CU: central unit
- DU: distributed unit
- eNA: enablers for network automation
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- ETSI: Europe and rest of world
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- I/F: interface
- KPI: key performance indicator
- Ll: layer 1
- LTE: long term evolution
- MAC: medium access control
- MDAF: management data analytics function
- MDAS: management data analytics service
- ML: machine learning
- MME: mobility management entity
- MnS: management service
- MT: machine translation
- NF: network function
- ng or NG: new generation
- ng-eNB or NG-eNB: new generation eNB
- NR: new radio
- N/W or NW: network
- NWDAF: network data analytics function
- OAM: operations, administration and maintenance
- OPEX: operating expenses
- PDCP: packet data convergence protocol
- PE: performance evaluation
- PHY: physical layer
- PRB: physical resource block
- QoS: quality of service
- RAN: radio access network
- RAT: radio access technology
- RF: radio frequency
- RLC: radio link control
- RRC: radio resource control
- RRH: remote radio head
- RS: reference signal
- RSRP: reference signal received power
- RSRQ: reference signal received quality
- RU: radio unit
- Rx: receiver
- SDAP: service data adaptation protocol
- SDO: standard development organization
- SGW: serving gateway
- SINR: signal-to-noise ratio
- SLA: service level agreement
- SMF: session management function
- S-NSSAI: single network slice selection assistance information
- TS: traffic steering
- TTI: transmission time interval
- Tx: transmitter
- UE: user equipment (e.g., a wireless, typically mobile device)
- UPF: user plane function
- ZSM: zero touch network and service management

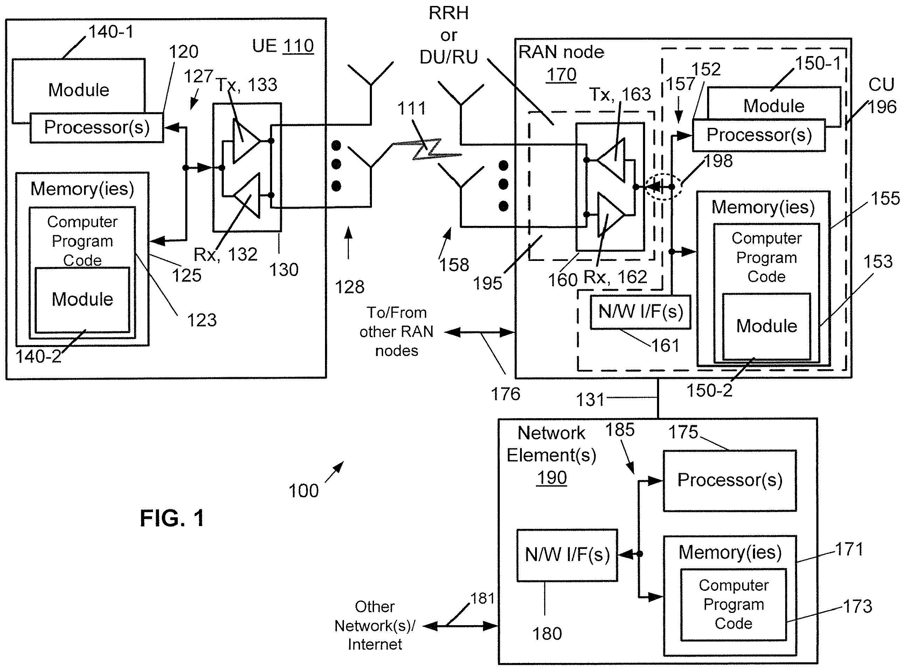

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element (s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element (s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein generally relate to evaluating action impact over mobile network performance.

Artificial Intelligence (AI) and Machine Learning (ML) techniques are being increasingly employed in 5G system (5GS) and are considered as a key enabler of 6G mobile network generation. NWDAF in 5G core (5GC) and MDAF in CAM bring intelligence and generate analytics by processing management and network data, and may employ AI and ML techniques.

The analytics consumer based on the analytics/predictions/recommendation produced by the NWDAF/MDAF, takes actions that are enforced in the mobile network. Example of decisions may be handover of UEs, traffic steering, poweron/off of base stations, etc....

There are multiple studies in different SDOs that introduce mechanisms for ML models performance monitoring.

In actual stage, multiple efforts have been focused on the monitoring of ML models performance in terms of accuracy of the model. Thus, the ML model performance are evaluated comparing the analytics/predictions/recommendations produced with the real outcome (once available) and measuring the errors made. This provides a measure of analytic/prediction/recommendation quality but does not provide any insight about the impact of the action taken based on such analytic/prediction/recommendation over the mobile network. The action impact may change drastically even for small-scale changes in the ML model performance. For example, an ML model may be employed to forecast the next hour load of a cell, with the goal of deciding the amount of resources that need to be allocated to accommodate such load. The optimal prediction would be the one that exactly match the real future load level. If the prediction is slightly higher than the future real load, this will result in an overprovisioning of resources leading to a cost. If the prediction is slightly below of the future real load, with an absolute difference equal to the case in which it is higher, then the accuracy of the prediction would be exactly the same, while the impact over the network is much different since not enough resources will be allocated leading to infringement of SLAs agreements.

Thus, it is very important to measure and track also the impact of action taken based on analytics/predictions/ recommendations produced by ML models and not only measuring their performances.

An existing solution proposes to detect and improve correctness of NWDAF analytics the introduction of analytics ID performance information and statistics that reflects the effects of action taken by NF based on the prediction produced. The novelties introduced by example embodiments of the present disclosure differ in multiple aspects: 1) in example embodiments of the present disclosure, the consumer may define which are the network elements to be monitored to evaluate action impact while in the existing solution the evaluation is limited to statistics related to the specific Analytics IDs. 2) The existing solution does not specify any data format for the storage of action impact and it does not track important information as the ML model analytic/prediction/recommendation that lead to the action taken, the context in which the action has been taken neither the ML model ID that produced the analytic/prediction/recommendation. These are all very important information to detect where is the potential issue (e.g., bad prediction vs bad action selection) and to relate it with the context over which the actions have been taken. 3) The existing solution limits the feedback regarding action impact from the producer to the consumer while example embodiments of the present disclosure also propose scenario in which for privacy reasons is the consumer that evaluate the action impact and provides feedback to the producer.

Example embodiments of the present disclosure introduces the enablers to allow NWDAF/MDAF to automatically collects information about the impact of the actions taken by an analytics consumer based on the received analytics/predictions/recommendations. This includes the introduction of:
1. Novel service parameters to configure the action impacts data collection, monitoring, and analysis. An analytics consumer may request the producer to monitor only specific indicators or to monitor all the impacted ones depending on the use case, the monitoring may be performed for a specific interval time after the action is taken or periodically, it may be performed per slice, or only for specific data flows or for specific network area, or for specific NFs/set of NFs.
2. New data model to store action impact along with the ML model analytic/prediction/recommendation, the context and the ID of the model utilized to produce it.
3. Novel feedback mechanism to allow the analytics consumer to inform the analytic producer about the result of the action impact analysis. This information is very important for enabling cooperation between the analytics consumer and producer which may leverage it to update/change the model or switch to a backup solution or design a new ML solution.

Example embodiments of the present disclosure may be contributed as a solution to eNA phase 3 and SA5 study items.

Following an exemplary technical implementation is detailed. In Embodiment 1 an implementation of the idea in SA2 context is provided. In Embodiment 2 indicators that can be part of action impact analysis profile for two exemplary use cases are provided. In Embodiment 3 an implementation of the idea in SA5 context is provided.

### Embodiment 1 - Technical implementation in SA2 context

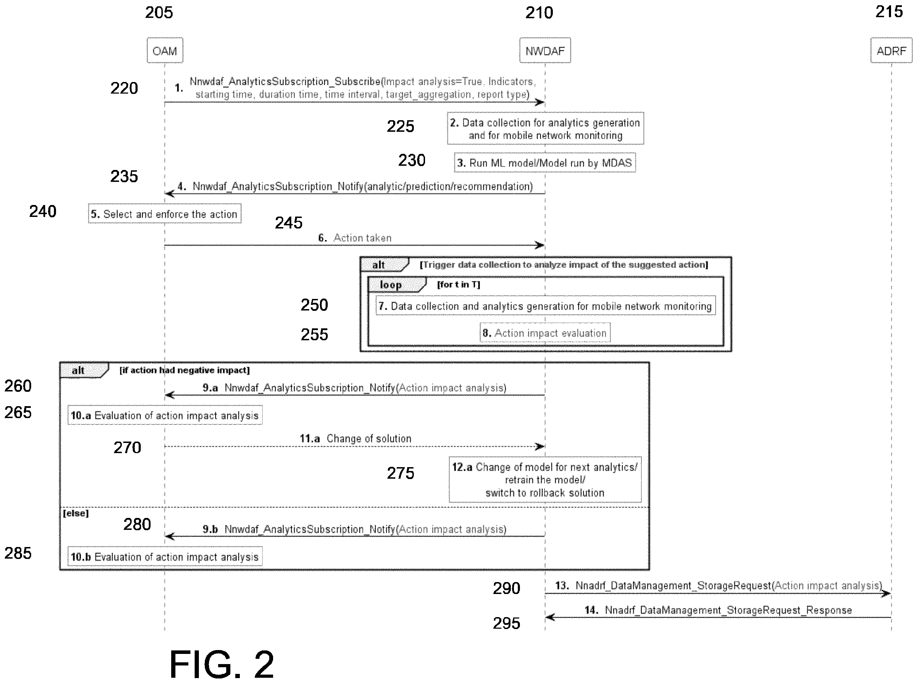

FIG. 2 shows a possible technical implementation of the novelties introduced by an example embodiment of the present disclosure in the context of SA2. Following a detailed description of each step. The novelties with respect of actual standards are highlighted in red.
1. (220) An analytics consumer as OAM (205) subscribes to NWDAF analytics ID (210) setting the impact analysis flag to True and specifying among others the following novel attributes as: in addition to the target of analytics, the consumer can specify the indicators impacted by the action that need to be monitored(the consumer may specify a set of KPIs, counters, TraceJobs, analytics (e.g., specified by Analytics ID which NWDAF can perform) to be monitored restricting the action impact monitoring to only the specified set of indicators instead of monitoring all the ones that may be impacted depending by the use case); when the action impact monitoring should start (it could be provided as delay after when the analytics/prediction/recommendation will be ready. It informs the NWDAF about the starting time from which the action has been enforced in the network and so indicators changes are expected), how long the monitoring should last and the time frequency at which should be performed. Furthermore, the consumer may request the report type (raw impacted KPIs, only deltas or trends) and to restrict the monitoring to only specific cells, traffic flows, slices, NFs, AOIs, UEs, etc...
2. (225) NWDAF collects the data to generate the requested analytics and also collects/generates the indicators to be monitored. Indicators may be restricted to the list provided by the analytics consumer or could be a predefined list of indicators to be monitored for a specific use case as the ones detailed in Embodiment 2. Indicators include also analytics that can be performed by NWDAF.
3. (230) NWDAF runs the ML model to generate the analytic/prediction/recommendation requested. In some use cases the ML model may be run by other network elements as MDAF in the management plane that can then notify the NWDAF triggering the action impact monitoring. Note: the action impact monitoring can be performed also by MDAF directly and the NWDAF can be a consumer of this service on MDAF.
4. (235) NWDAF notifies the consumer with the analytic/prediction/recommendation requested.
5. (240) The analytics consumer enforces in the network the action suggested by the analytic report provided by NWDAF. The action may be a handover decision, or steering the traffic of a flow to another frequency band or power-off a base station.
6. (245) The analytics consumer informs the NWDAF about the action taken.
7. (250) After receiving information about the action taken, or at the time specified by the analytics consumer, the NWDAF starts the action impact analysis period. During this period, the NWDAF collects/generates indicators that need to be monitored.
8. (255) The NWDAF comparing the indicators collected before the action was enforced with the actual indicators, evaluates the impact of the action. This process is repeated for the time specified by the consumer.
9.a (260) If NWDAF detects that the action taken results in an indicators degradation, it informs the analytics consumer. The analysis report may include different content depending on what has been specified by the analytics consumer in the request at step 1 (220): it may request along with the indication of a positive/negative impact, the raw indicators, only the delta compared with their values before the action was taken and/or their trends (e.g., over a specified time period).
10.a (265) The analytics consumer evaluates the impact of the action taken identifying the cause of the indicators degradation.
11.a (270) In case the cause of the indicators degradation is given by wrong analytic/prediction/recommendation, the analytics consumer informs the NWDAF to change/update the ML model utilized or to request the design of a novel ML-based solution. The cause of the degradation may be also the action selection criteria.
12.a (275) Based on this input as well as further inputs collected and the internal logic of NWDAF, the NWDAF may decide to perform certain actions or not, e.g. it may change the ML model or retrain the ML model or switch to a backup solution.
9.b (280) In case the action results in no indicator degradation, the NWDAF informs the analytics consumer providing also the action impact analysis.
10.b (285) The analytics consumer evaluates the action impact analysis to understand if the action results in satisfying improvements. In case the improvements obtained are not enough due to a wrong analytic/prediction/recommendation the consumer may ask for an ML model update.
13. (290) Once the analysis is over, the NWDAF saves the action impact analysis to the ADRF (215) along with the model ID utilized for generating the analytic/prediction/recommendation, the feedback received and the action taken by the consumer in anonymized form. The NWDAF may also include information regarding the mobile network status (mobile network context, sub-area types, AOI, slice and NF types).
14. (295) ADRF notifies NWDAF that the saving of the analytics impact analysis succeeded.

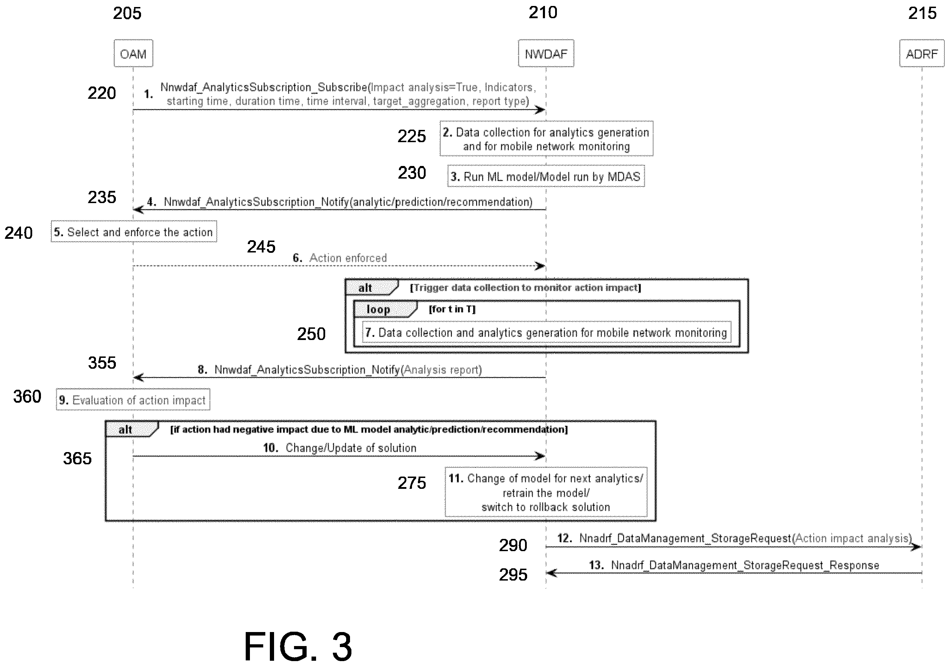

In FIG. 3 an alternative option of the above example is provided. In this implementation option, the NWDAF instead of evaluating the action impact (255) after optionally being informed by the analytics consumer that an action has been enforced (in this case the NWDAF is not interested in which action has been selected since it will not evaluate action impact. This message is optional and could be utilized by the consumer to inform the NWDAF that starting from that moment it should expect change in network indicators.), collects and generates relevant mobile network indicators (the default ones or the ones indicated by the consumer in the subscription) and report them to the consumer (355). The analysis report, as specified in the example above, may notify only the delta between the actual indicators and their previous values, the trends or the full raw indicators. The consumer then, evaluates the action impact (360) and in case it discovers that the action had a bad impact due to the wrong analytic/prediction/recommendation provided by the NWDAF, may request an ML model change/update (365) . In case the analytics consumer detects that the bad impact is due to a wrong action selection it may consider to follow the former NWDAF's recommendation (if still valid, otherwise it may request a new analytic/prediction/recommendation since the mobile network state has changed) and evaluate its impact over the network. If the action taken had a positive impact, the consumer may inform the NWDAF with a positive feedback. As in the above example, at the end the NWDAF stores the action impact analysis at the ADRF along with the feedback received from the analytics consumer and if provided with the action taken (290).

### Embodiment 2 - Indicators to be monitored for action impact analysis in two exemplary use cases

2a) Traffic steering use case: One of the important use cases in which the usage of ML may provide benefits in network performance in is the distribution of load among cells, including the usage of different frequency layers or access technologies which we can in general refer to as Traffic Steering (TS). The traffic steering procedure may be very complicated, as multiple inputs need to be considered for optimal decision making, e.g., information on the load distribution, UE mobility, expected QoS targets taking into account constraints such as energy efficiency, handover performance, admission control, carrier aggregation and multi-connectivity policies. Consequently, there are multiple alternatives of configuring the parameters that may be used to effectuate traffic steering, leading to diverse impact to overall network performance.
1. (e.g. 220) An analytics consumer subscribes to NWDAF specifying the parameters as described in Embodiment 1 in his request:
   analytics ID= "impact analysis",
   Target of analytics reporting: all UEs, S-NSSAI1 as the consumer may be interested in impact analysis in a specific slice.
   Target counters/KPIs: Cell load statistics: number of active users or connections, number of scheduled active users per TTI, PRB utilization.
   Per user performance statistics: e.g, PDCP throughput, RLC or MAC layer latency, etc.
   Start of action impact monitoring: immediate
   End of action impact monitoring: unlimited
   Reporting type: target counters/KPIs and trend in period [t1,t2] relative to the start of the action
   Report period/frequency: every 15 minutes after the start of the action
2. (e.g. 225) NWDAF collects the data to generate the requested analytics, such as RSRP/RSRQ/CQI information for serving and neighboring cells belonging to indicated S-NSSAI1. In the case of multi-access setup the intra-RAT and inter-RAT measurement reports may be included as well, such as cell quality thresholds, CGI reports and measurement gaps on per-UE or perfrequency (see, e.g., O-RAN WG1, Use Cases detailed Specification v07.00). Furthermore, the NWDAF may collect/generate also the indicators to be monitored in relation to traffic steering use case, e.g. UE connection and mobility/handover statistics, e.g. including info of successful and failed handovers, cell load statistics, and per UE performance statistics.
3. (e.g. 230) NWDAF runs the ML model to generate the analytic/prediction/recommendation requested, e.g. the ML model may recommend to move certain UEs to specific LTE frequency layers and further allow 5G access for those users as well.
4. (e.g. 235) NWDAF notifies the consumer with the recommendation to move certain UEs to specific LTE frequency layers and further allow 5G access for those users as well.
5. (e.g. 240) The analytics consumer enforces in the network the action suggested by the report provided by NWDAF. The action may be to only handover the recommended UEs to specific LTE frequency layer but not to allow 5G access, or to allow 5G access as well.
6. (e.g. 245) The analytics consumer informs the NWDAF that the action has been taken, optionally specifying the exact time instance in taking the action.
7. (e.g. 250) After receiving information about the action taken, or at the time specified by the analytics consumer, the NWDAF starts the action impact analysis. The NWDAF continues collection/generation of indicators that need to be monitored such as RSRP/RSRQ/CQI information for serving and neighboring cells belonging to indicated S-NSSAI1, UE connection and mobility/handover statistics, cell load statistics, per UE performance statistics, etc. from time after the action has been taken
8. (e.g. 255) The NWDAF comparing the indicators collected before the action was enforced cf. Step 2 (e.g. 225) with the indicators collected after the action has been taken cf Step 7. (e.g. 250), evaluates the impact of the action and generates according reports. This process is repeated every 15 minutes specified by the consumer.
9. (e.g. 290) Once the report is ready, the NWDAF saves the action impact analysis report to the ADRF along with the model ID utilized for generating the analytic/prediction/recommendation.
10. (e.g. 295) ADRF notifies NWDAF that the saving of the analytics impact analysis succeed.
11.a (e.g. 260) If NWDAF detects that the action taken results in an indicators degradation (the trend analysis requested by the consumer was negative) informs the analytics consumer.
12.a (e.g. 265) The analytics consumer evaluates the impact of the action taken.
13.a (e.g. 270) In case the cause of the indicators degradation is given by wrong analytic/prediction/recommendation, the analytics consumer informs the NWDAF to change/update the ML model utilized or to request the design of a novel ML-based solution. The cause of the degradation may be also the decision on action taken by the consumer, e.g. despite the additional recommendation to allow 5G access, the consumer has only performed a handover of specific UEs to specific LTE frequency layers. Therefore, before the consumer indicates the need for ML model change/update, it may request another recommendation and follow it completely by performing all the recommended actions. Alternatively, if the previous recommendation is still valid the consumer may perform additional actions from original recommendation, inform the NWDAF about the action update and request for updated analysis. If even after the updated action the degradation has been experienced the consumer may inform the NWDAF to change/update the ML model.
14.a (e.g. 275) Based on such input as well as other input collected by NWDAF the NWDAF may decide to perform certain changes or not, e.g., the NWDAF may decide to change the ML model or retrain the ML model or switch to a backup solution.
11.b (e.g. 280) In case the action results in no indicator degradation, the NWDAF informs the analytics consumer providing also the action impact analysis, following the periodicity and the report type requested by the consumer, i.e. every 15 minutes the report may be sent to the consumer indicating the KPIs requested and the trend in period [t1,t2] relative to the start of the updated action.
12.b (e.g. 285, 270) The analytics consumer evaluates the action impact analysis to understand if the traffic steering actions brought to satisfying improvements. If that is not the case the consumer may ask for an ML model update.
2b) Energy efficiency use case: Ever increasing number of mobile subscribers implies the expansions in the amount of mobile network functions needed to support the users. This results in increasing energy consumption and the mobile network OPEX. In order to minimize the energy costs, the operators may opt in cell activation/deactivation as an approach to achieve energy saving. The cell switch off may be applied if the traffic volume is lower than a predefined threshold, whereas the remaining UEs may be hand-over to a different cell, e.g. during the night time the small cells may be switched off and the users may be served by macro cells. However, the identification of actions that need to be taken to achieve energy savings may be complex as many input need to be taken into account along with different constraints. If the action is not properly chosen the handover of UEs to different cell for the purpose of switching off the cell may lead to user experience degradation for affected UEs or overload of new target cell, and consequently to drop in network performance. Therefore, it is of high importance to be able to evaluate the actual impact of the energy saving decisions and actions.

For requesting the analysis of impact of energy efficiency/saving actions the steps described in Embodiment 1 and Embodiment 2a) apply. The main use-case specific difference is in the action that can be taken as a result of ML model analytic/prediction/recommendation (e.g. 235) as well as the input data required to perform the action impact analysis (e.g. 225). Namely the following steps will have use-case specific flavor:

2. (e.g. 225) NWDAF collects the data to generate the requested analytics, such as UE location information (e.g., coordinates, serving cell ID, moving velocity) as well as UE measurement report (e.g. UE RSRP, RSRQ, SINR measurement, etc.), including cell level and beam level UE measurements (see, e.g., 3GPP RAN3 TR 37.817 Study on enhancement for Data Collection for NR and EN-DC (Release 17)). Furthermore, the NWDAF may collect/generate further indicators to be monitored in relation to energy efficiency use case, e.g. UE mobility/trajectory prediction, current and predicted information on network resources.

3. (e.g. 230) NWDAF runs the ML model to generate the analytic/prediction/recommendation requested, e.g. the ML model may recommend to move only certain UEs in sub-urban area from certain small cells with the lowest load to macro cells in order to enable switching off of that small cells in sub-urban area during night time. At the same time the ML model may recommend to move all UEs in rural area from all small cells in order to enable switching off of all small cells in rural area during night time.

5. (e.g. 240) The analytics consumer enforces in the network the action suggested by the report provided by NWDAF. The action may be to switch off the cells in rural areas or to additionally switch off the recommended certain cells in sub-urban area.

By monitoring and analyzing the KPIs and indicators before and after the action, the NWDAF may deduce if the action has resulted in the improvement or degradation of network performance of the targeted area as specified by the consumer (e.g. 255). E.g. if the action was taken in which all small cells are switched off including the sub-urban areas, the RSRP, RSRQ, SINR measurement of affected UEs and the difference to the measurements before the action will reveal the impact of the action taken. Based on the impact report given back to the consumer (e.g. 260), he can choose another action based on the same recommendation (e.g. switching off only cells in rural areas), to provide feedback to ML model provider asking for model updates/changes, or opt at temporarily using non-ML based decision (e.g. 265, 270).

### Embodiment 3 - Technical implementation in SA5 context

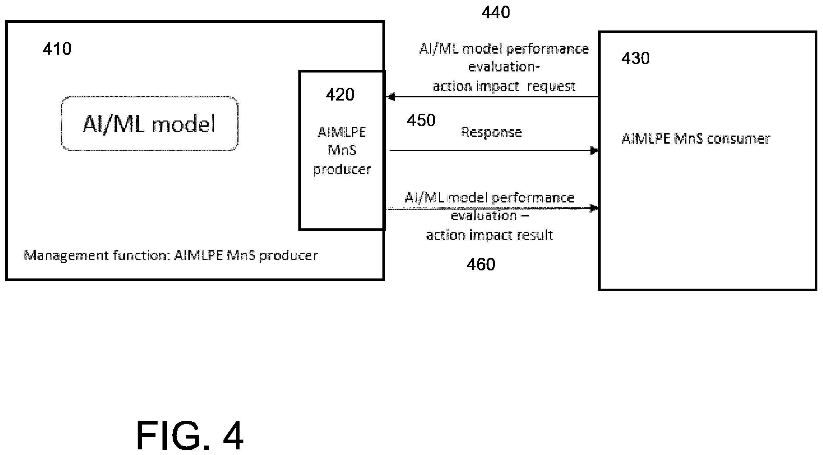

FIG. 4 illustrates the interaction between the AIMLPE (AI/ML Performance evaluation-action impact) producer (420) and consumer (430). Note: in the present description, we describe merely the aspect of action impact evaluation in the performance evaluation of the AI/ML model (410). Other aspects of performance evaluation, e.g. the measures of precision or accuracy of AI/ML outcomes are out of scope of the present disclosure. Therefore, by AIMLPE service hereby we refer to evaluation of the impact of the action taken by the network entity based on the AI/ML outcome/recommendation.

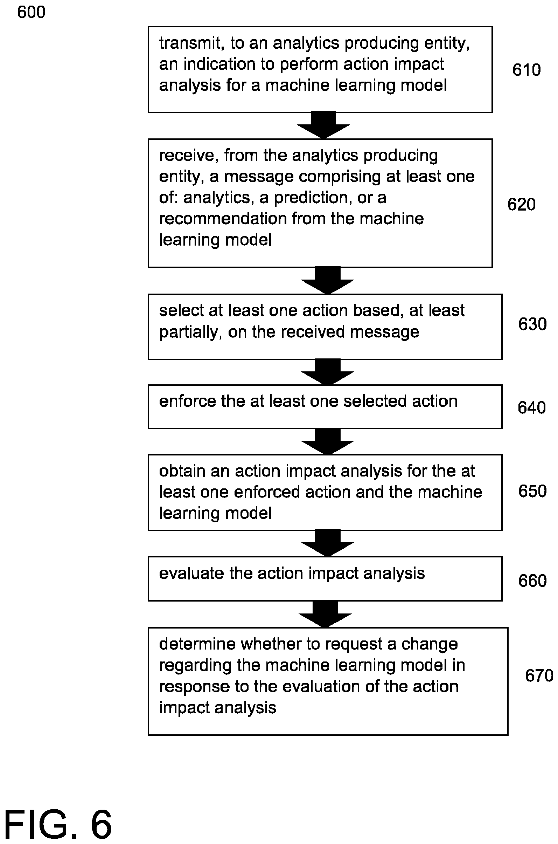

FIG. 4 illustrates AI/ML model (410) performance evaluation - action impact requested (440) by AIMLPE MnS consumer (420) (adapted from TS 28.105. Figure 6.6.2.1-1: AI/ML model training requested by AIMLMT MnS consumer).

The AI/ML model performance evaluation - action impact may be triggered by the request(s) (440) from one or more AIMLPE MnS consumer(s) (420). To trigger an AI/ML model performance evaluation - action impact, the AIMLPE MnS consumer (420) requests (440) the AIMLPE MnS producer (430) to provide the evaluation result (450, 460) regarding the action impact based on the recommendation from the AI/ML model. In the request (440), the consumer should specify the inference type which indicates the function or purpose of the model, e.g., CoverageProblemAnalysis. The AIMLPE MnS producer can perform the model performance evaluation - action impact according to the designated inference type. The consumer may further provide in his request the information on NFs, slice, AOI, UEs, etc., which are considered to be relevant/impacted by the action, along with further relevant information about the action which impact shall be evaluated.

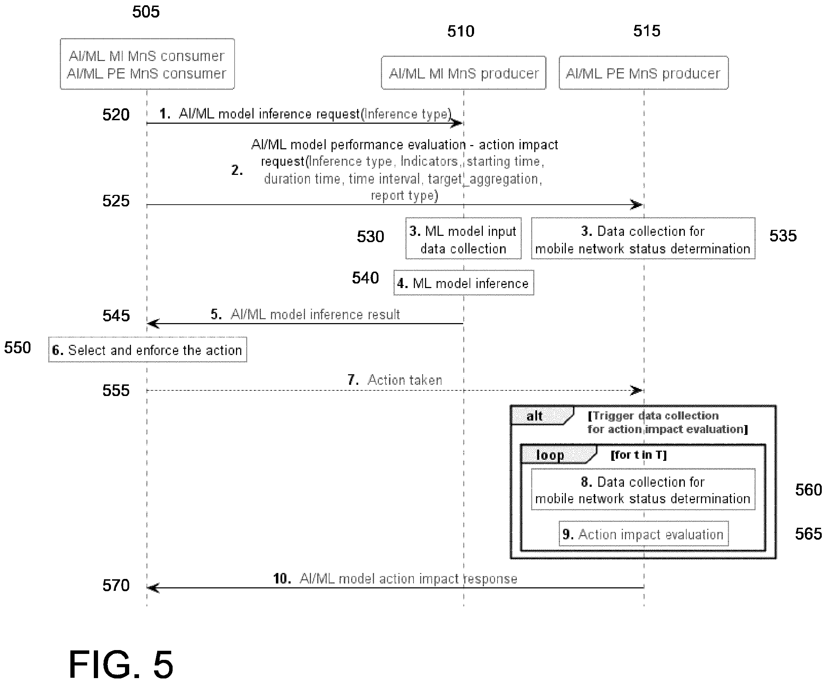

FIG. 5 shows a possible technical implementation in SA5 context. The figure illustrates the interactions between the AI/ML Model Inference MnS consumer (505)/producer (AI/ML MI MnS) (510) and the AI/ML Performance Evaluation MnS consumer/producer (AI/ML PE MnS) (515).
1. (520) The AI/ML MI MnS consumer sends an inference request to the AI/ML MI MnS producer specifying the inference type.
2. (525) The AI/ML PE MnS consumer sends a model performance evaluation - action impact request to the AI/ML PE MnS producer specifying the inference type and the attributes described in step 1 of Embodiment 1 (e.g. 220).
3. The AI/ML MI MnS producer starts the data collection to produce the requested inference (530), while the AI/ML PE MnS producer starts the data collection for determining the actual mobile network status (535). As detailed in Embodiment 1, this may include NWDAF analytics, TraceJobs, MDT, PM, etc.
4. (540) The AI/ML MI MnS producer runs the ML model.
5. (545) The AI/ML MI MnS producer provides to the AI/ML MI MnS consumer the requested inference report.
6. (550) The AI/ML MI MnS consumer based on the inference report, selects and enforces the action.
7. (555) Optionally, the AI/ML PE MnS consumer may inform the AI/ML PE MnS producer that the action has been taken.
8. (560) The AI/ML PE MnS producer periodically collects data for monitoring the mobile network status.
9. (565) The AI/ML PE MnS producer evaluates the action impact by comparing the actual mobile network status with the previous one.
10. (570) The AI/ML PE MnS producer forwards to the AI/ML PE MnS consumer the action impact report. The report may include different content depending on what has been specified by the analytics consumer in the request at step 2 (525): e.g., it may report along with the indication of a positive/negative impact, the raw indicators, only the delta compared with their values before the action was taken and/or their trends (e.g., over a specified time period), similar to Step 9 from Embodiment 1 (e.g. 260/280).

Note: Similar to the alternative implementation option in Figure 2, also in the case of 3GPP SA5 context the consumer himself may evaluate the action impact based on the requested report from AI/ML PE MnS producer (e.g. 360).

Example embodiments of the present disclosure may be relevant to 3GPP SA2 specifications, for example as a solution to KI #1 of TR 23700-81.

Furthermore, example embodiments of the present disclosure may be relevant for 3GPP SA5 Study on AI/ML management (FS_AIML_MGMT), for example the Objective #1 related to "Performance evaluation of AI/ML-enabled function".

Example embodiments of the present disclosure may be integrated in the context of existing frameworks such as NWDAF or MDAS defined in 3GPP SA2 and SA5, as well as other standardization frameworks such as ETSI ZSM (012). Example embodiments of the present disclosure may be contributed to SA2 as a solution to KI #1 of TR 23700-81 or SA5 as solution for Objective #1 related to "Performance evaluation of AI/ML-enabled function".

FIG. 6 illustrates the potential steps of an example method 600. The example method 600 may include: transmitting, to an analytics producing entity, an indication to perform action impact analysis for a machine learning model, 610; receiving, from the analytics producing entity, a message comprising at least one of: analytics, a prediction, or a recommendation from the machine learning model, 620; selecting at least one action based, at least partially, on the received message, 630; enforcing the at least one selected action, 640; obtaining an action impact analysis for the at least one enforced action and the machine learning model, 650; evaluating the action impact analysis, 660; and determining whether to request a change regarding the machine learning model in response to the evaluation of the action impact analysis, 670.

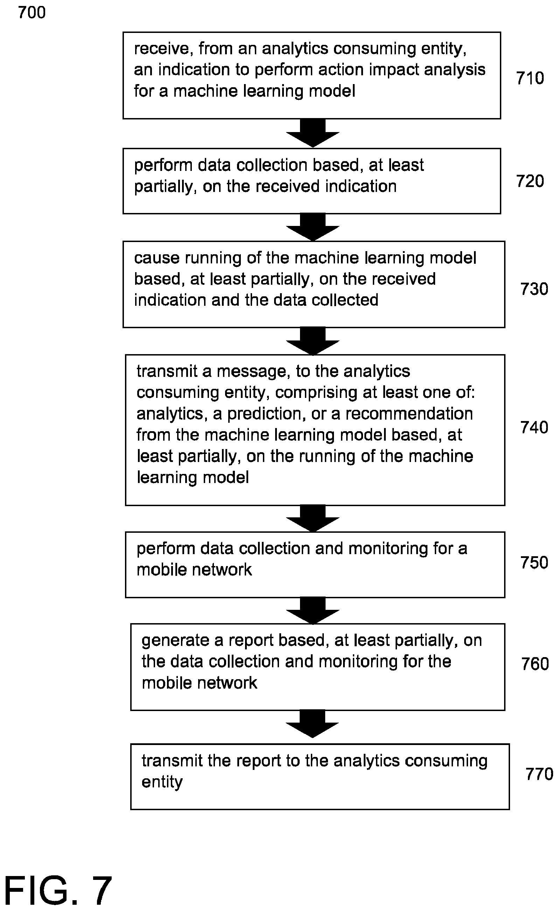

FIG. 7 illustrates the potential steps of an example method 700. The example method 700 may include: receiving, from an analytics consuming entity, an indication to perform action impact analysis for a machine learning model, 710; performing data collection based, at least partially, on the received indication, 720; cause running of the machine learning model based, at least partially, on the received indication and the data collected, 730; transmitting a message, to the analytics consuming entity, comprising at least one of: analytics, a prediction, or a recommendation from the machine learning model based, at least partially, on the running of the machine learning model, 740; performing data collection and monitoring for a mobile network, 750; generating a report based, at least partially, on the data collection and monitoring for the mobile network, 760; and transmitting the report to the analytics consuming entity, 770.

In accordance with one example embodiment, an apparatus may comprise: at least one processor; and at least one memory including computer program code; the at least one memory and the computer program code configured to, with the at least one processor, cause the apparatus at least to: transmit, to an analytics producing entity, an indication to perform action impact analysis for a machine learning model; receive, from the analytics producing entity, a message that may comprise at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

The indication to perform action impact analysis for the machine learning model may comprise at least one of: an indication of a start time for the action impact analysis, an indication of a duration for the action impact analysis, an indication of a time interval for the action impact analysis, an indication of a time frequency for the action impact analysis, an indication of a periodicity for the action impact analysis, an indication of a report type for the action impact analysis, an identifier of the machine learning model, an indication of a target aggregation for the action impact analysis, an indication of a at least one network element to be monitored, an indication of a data flow to be monitored, an indication of a traffic flow to be monitored, an indication of a network area to be monitored, an indication of a cell to be monitored, an indication of a slice to be monitored, an indication of a set of indicators impacted by the enforced action to be monitored, or an indication of one or more network functions to be monitored.

The example apparatus may be further configured to: transmit, to the analytics producing entity, an indication of the enforced action.

In accordance with one aspect, an example method may be provided comprising: transmitting, to an analytics producing entity, an indication to perform action impact analysis for a machine learning model; receiving, from the analytics producing entity, a message that may comprise at least one of: analytics, a prediction, or a recommendation from the machine learning model; selecting at least one action based, at least partially, on the received message; enforcing the at least one selected action; obtaining an action impact analysis for the at least one enforced action and the machine learning model; evaluating the action impact analysis; and determining whether to request a change regarding the machine learning model in response to the evaluation of the action impact analysis.

In accordance with one example embodiment, an apparatus may comprise: circuitry configured to perform: transmit, to an analytics producing entity, an indication to perform action impact analysis for a machine learning model; receive, from the analytics producing entity, a message that may comprise at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

In accordance with one example embodiment, an apparatus may comprise: processing circuitry; memory circuitry including computer program code, the memory circuitry and the computer program code configured to, with the processing circuitry, enable the apparatus to: transmit, to an analytics producing entity, an indication to perform action impact analysis for a machine learning model; receive, from the analytics producing entity, a message that may comprise at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory (ies) that work together to cause an apparatus, such as a mobile phone or server, to perform various functions) and (c) hardware circuit(s) and or processor (s), such as a microprocessor(s) or a portion of a microprocessor (s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: transmitting, to an analytics producing entity, an indication to perform action impact analysis for a machine learning model; receiving, from the analytics producing entity, a message that may comprise at least one of: analytics, a prediction, or a recommendation from the machine learning model; selecting at least one action based, at least partially, on the received message; enforcing the at least one selected action; obtaining an action impact analysis for the at least one enforced action and the machine learning model; evaluating the action impact analysis; and determining whether to request a change regarding the machine learning model in response to the evaluation of the action impact analysis.

In accordance with one example embodiment, a non-transitory computer-readable medium comprising program instructions stored thereon which, when executed with at least one processor, cause the at least one processor to: transmitting, to an analytics producing entity, an indication to perform action impact analysis for a machine learning model; receive, from the analytics producing entity, a message that may comprise at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

In accordance with another example embodiment, a non-transitory program storage device readable by a machine may be provided, tangibly embodying a program of instructions executable by the machine for performing operations, the operations comprising: transmitting, to an analytics producing entity, an indication to perform action impact analysis for a machine learning model; receive, from the analytics producing entity, a message that may comprise at least one of: analytics, a prediction, or a recommendation from the machine learning model; select at least one action based, at least partially, on the received message; enforce the at least one selected action; obtain an action impact analysis for the at least one enforced action and the machine learning model; evaluate the action impact analysis; and determine whether to request a change regarding the machine learning model in response to the evaluation of the action impact analysis.

In accordance with one example embodiment, an apparatus may comprise: at least one processor; and at least one memory including computer program code; the at least one memory and the computer program code configured to, with the at least one processor, cause the apparatus at least to: receive, from an analytics consuming entity, an indication to perform action impact analysis for a machine learning model; perform data collection based, at least partially, on the received indication; cause running of the machine learning model based, at least partially, on the received indication and the data collected; transmit a message, to the analytics consuming entity, that may comprise at least one of: analytics, a prediction, or a recommendation from the machine learning model based, at least partially, on the running of the machine learning model; perform data collection and monitoring for a mobile network; generate a report based, at least partially, on the data collection and monitoring for the mobile network; and transmit the report to the analytics consuming entity.

The example apparatus may be further configured to: transmit, to an analytical data repository function, a request to store, at least, the report; and receive, from the analytical data repository function, a response to the request.

The example apparatus may be further configured to: receive an indication to cause a first change regarding the machine learning model; determine a second change regarding the machine learning model, wherein the second change may be determined based, at least partially, on the first change; and perform the second change regarding the machine learning model.

The example apparatus may be further configured to: determine an action of the analytics consuming entity; and perform the data collection and monitoring for the mobile network in response to the determined action of the analytics consuming entity, wherein the report may comprise an action impact evaluation.

In accordance with one aspect, an example method may be provided comprising: receiving, from an analytics consuming entity, an indication to perform action impact analysis for a machine learning model; performing data collection based, at least partially, on the received indication; causing running of the machine learning model based, at least partially, on the received indication and the data collected; transmitting a message, to the analytics consuming entity, that may comprise at least one of: analytics, a prediction, or a recommendation from the machine learning model based, at least partially, on the running of the machine learning model; performing data collection and monitoring for a mobile network; generating a report based, at least partially, on the data collection and monitoring for the mobile network; and transmitting the report to the analytics consuming entity.

In accordance with one example embodiment, an apparatus may comprise: circuitry configured to perform: receive, from an analytics consuming entity, an indication to perform action impact analysis for a machine learning model; perform data collection based, at least partially, on the received indication; cause running of the machine learning model based, at least partially, on the received indication and the data collected; transmit a message, to the analytics consuming entity, that may comprise at least one of: analytics, a prediction, or a recommendation from the machine learning model based, at least partially, on the running of the machine learning model; perform data collection and monitoring for a mobile network; generate a report based, at least partially, on the data collection and monitoring for the mobile network; and transmit the report to the analytics consuming entity.

In accordance with one example embodiment, an apparatus may comprise: processing circuitry; memory circuitry including computer program code, the memory circuitry and the computer program code configured to, with the processing circuitry, enable the apparatus to: receive, from an analytics consuming entity, an indication to perform action impact analysis for a machine learning model; perform data collection based, at least partially, on the received indication; cause running of the machine learning model based, at least partially, on the received indication and the data collected; transmit a message, to the analytics consuming entity, that may comprise at least one of: analytics, a prediction, or a recommendation from the machine learning model based, at least partially, on the running of the machine learning model; perform data collection and monitoring for a mobile network; generate a report based, at least partially, on the data collection and monitoring for the mobile network; and transmit the report to the analytics consuming entity.

In accordance with one example embodiment, an apparatus may comprise means for performing: receiving, from an analytics consuming entity, an indication to perform action impact analysis for a machine learning model; performing data collection based, at least partially, on the received indication; causing running of the machine learning model based, at least partially, on the received indication and the data collected; transmitting a message, to the analytics consuming entity, that may comprise at least one of: analytics, a prediction, or a recommendation from the machine learning model based, at least partially, on the running of the machine learning model; performing data collection and monitoring for a mobile network; generating a report based, at least partially, on the data collection and monitoring for the mobile network; and transmitting the report to the analytics consuming entity.

In accordance with one example embodiment, a non-transitory computer-readable medium comprising program instructions stored thereon which, when executed with at least one processor, cause the at least one processor to: cause receiving, from an analytics consuming entity, of an indication to perform action impact analysis for a machine learning model; perform data collection based, at least partially, on the received indication; cause running of the machine learning model based, at least partially, on the received indication and the data collected; cause transmitting of a message, to the analytics consuming entity, that may comprise at least one of: analytics, a prediction, or a recommendation from the machine learning model based, at least partially, on the running of the machine learning model; perform data collection and monitoring for a mobile network; generate a report based, at least partially, on the data collection and monitoring for the mobile network; and cause transmitting of the report to the analytics consuming entity.

In accordance with another example embodiment, a non-transitory program storage device readable by a machine may be provided, tangibly embodying a program of instructions executable by the machine for performing operations, the operations comprising: cause receiving, from an analytics consuming entity, of an indication to perform action impact analysis for a machine learning model; perform data collection based, at least partially, on the received indication; cause running of the machine learning model based, at least partially, on the received indication and the data collected; cause transmitting of a message, to the analytics consuming entity, that may comprise at least one of: analytics, a prediction, or a recommendation from the machine learning model based, at least partially, on the running of the machine learning model; perform data collection and monitoring for a mobile network; generate a report based, at least partially, on the data collection and monitoring for the mobile network; and cause transmitting of the report to the analytics consuming entity.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus (205) comprising:
means for transmitting (610), to an analytics producing entity (210), an indication to perform action impact analysis for a machine learning model;
means for receiving (620), from the analytics producing entity (210), a message comprising at least one of: analytics, a prediction, or a recommendation from the machine learning model;
means for selecting (630) at least one action based, at least partially, on the received message;
means for enforcing (640) the at least one selected action;
means for obtaining (650) an action impact analysis for the at least one enforced action and the machine learning model;
means for evaluating (660) the action impact analysis; and
means for determining (670) whether to request a change regarding the machine learning model in response to the evaluation of the action impact analysis.

2. The apparatus (205) of claim 1, wherein the indication to perform action impact analysis for the machine learning model comprises at least one of:
an indication of a start time for the action impact analysis,
an indication of a duration for the action impact analysis,
an indication of a time interval for the action impact analysis,
an indication of a time frequency for the action impact analysis,
an indication of a periodicity for the action impact analysis,
an indication of a report type for the action impact analysis,
an identifier of the machine learning model,
an indication of a target aggregation for the action impact analysis,
an indication of a at least one network element to be monitored,
an indication of a data flow to be monitored,
an indication of a traffic flow to be monitored,
an indication of a network area to be monitored,
an indication of a cell to be monitored,
an indication of a slice to be monitored,
an indication of a set of indicators impacted by the enforced action to be monitored, or
an indication of one or more network functions to be monitored.

3. The apparatus (205) of claim 1 or 2, wherein the apparatus further comprises:
means for transmitting, to the analytics producing entity (210), an indication of the enforced action.

4. A method comprising:
transmitting (610), to an analytics producing entity (210), an indication to perform action impact analysis for a machine learning model;
receiving (620), from the analytics producing entity (210), a message comprising at least one of: analytics,
a prediction, or a recommendation from the machine learning model;
selecting (630) at least one action based, at least partially, on the received message;
enforcing (640) the at least one selected action;
obtaining (650) an action impact analysis for the at least one enforced action and the machine learning model;
evaluating (660) the action impact analysis; and
determining (670) whether to request a change regarding the machine learning model in response to the evaluation of the action impact analysis.

5. The method of claim 4, wherein the indication to perform action impact analysis for the machine learning model comprises at least one of:
an indication of a start time for the action impact analysis,
an indication of a duration for the action impact analysis,
an indication of a time interval for the action impact analysis,
an indication of a time frequency for the action impact analysis,
an indication of a periodicity for the action impact analysis,
an indication of a report type for the action impact analysis,
an identifier of the machine learning model,
an indication of a target aggregation for the action impact analysis,
an indication of at least one network element to be monitored,
an indication of a data flow to be monitored,
an indication of a traffic flow to be monitored,
an indication of a network area to be monitored,
an indication of a cell to be monitored,
an indication of a slice to be monitored,
an indication of a set of indicators impacted by the at least one enforced action to be monitored, or
an indication of one or more network functions to be monitored.

6. An apparatus (210) comprising:
means for receiving (710), from an analytics consuming entity (205), an indication to perform action impact analysis for a machine learning model;
means for performing (720) data collection based, at least partially, on the received indication;
means for causing (730) running of the machine learning model based, at least partially, on the received indication and the data collected;
means for transmitting (740) a message, to the analytics consuming entity (205), comprising at least one of: analytics, a prediction, or a recommendation from the machine learning model based, at least partially, on the running of the machine learning model;
means for performing (750) data collection and monitoring for a mobile network;
means for generating (760) a report based, at least partially, on the data collection and monitoring for the mobile network; and
means for transmitting (770) the report to the analytics consuming entity (205).

7. The apparatus (210) of claim 6, further comprising:
means for transmitting, to an analytical data repository function, a request to store, at least, the report; and
means for receiving, from the analytical data repository function, a response to the request.

8. The apparatus (210) of claim 6 or 7, further comprising:
means for receiving an indication to cause a first change regarding the machine learning model;
means for determining a second change regarding the machine learning model, wherein the second change is determined based, at least partially, on the first change; and
means for performing the second change regarding the machine learning model.

9. The apparatus (210) of any of claims 7 through 8, further comprising:
means for determining an action of the analytics consuming entity (205); and
means for performing the data collection and monitoring for the mobile network in response to the determined action of the analytics consuming entity (205),
wherein the report comprises an action impact evaluation.

10. A method comprising:
receiving (710), from an analytics consuming entity (205), an indication to perform action impact analysis for a machine learning model;
performing (720) data collection based, at least partially, on the received indication;
causing (730) running of the machine learning model based, at least partially, on the received indication and the data collected;
transmitting (740) a message, to the analytics consuming entity (205), comprising at least one of: analytics, a prediction, or a recommendation from the machine learning model based, at least partially, on the running of the machine learning model;
performing (750) data collection and monitoring for a mobile network;
generating (760) a report based, at least partially, on the data collection and monitoring for the mobile network; and
transmitting (770) the report to the analytics consuming entity (205).

11. The method of claim 10, further comprising:
transmitting, to an analytical data repository function, a request to store, at least, the report;
and
receiving, from the analytical data repository function, a response to the request.

12. The method of claim 10 or 11, further comprising:
receiving an indication to cause a first change regarding the machine learning model;
determining a second change regarding the machine learning model, wherein the second change is determined based, at least partially, on the first change; and
performing the second change regarding the machine learning model.

13. The method of any of claims 10 through 12, further comprising:
determining an action of the analytics consuming entity (205); and
performing the data collection and monitoring for the mobile network in response to the determined action of the analytics consuming entity (205),
wherein the report comprises an action impact evaluation.

14. A computer program comprising instructions for causing an apparatus to perform at least the method of any of claims 4 through 5, or the method of any of claims 10 through 13.
